# EUROPEAN PATENT APPLICATION

(11) **EP 4 738 780 A1**
(43) Date of publication of application: **06.05.2026**
(21) Application number: 25213113.1
(22) Date of filing: 03.11.2025
(51) Int. Cl.: H04L 43/0817, H04L 43/20, H04W 24/04, H04W 24/08, H04L 41/0668, H04L 43/024, H04L 43/16

(54) **A METHOD OF MANAGING HARDWARE RESOURCES IN AN OPEN RAN CLOUD PLATFORM, A CLOUD PLATFORM, AN OPEN RAN APPLICATION AND A COMPUTER PROGRAM**

(30) Priority: 04.11.2024 GB 202416239
(71) Applicant: Vodafone Group Services Limited, Newbury RG14 2FN (GB)
(72) Inventor: LU, Zhanhong, London W2 6BY (GB)
(74) Representative: Boult Wade Tennant LLP

(57) **Abstract**

A method of managing hardware resources in an Open Radio Access Network, Open RAN, cloud platform is provided. The cloud platform is configured to host an Open RAN application at a radio site. The Open RAN application comprises one or more application processes. The method comprises communicating, from a manager of the cloud platform to the Open RAN application, hardware resource status data.

## Description

### Field of the invention

The present invention relates to management of hardware resources in an Open Radio Access Network cloud platform. In particular, the invention relates to methods of sharing hardware resource status data between the cloud platform and the OpenRAN application.

### Glossary

RAN - Radio Access Network
MNO - Mobile Network Operator
O-RAN - Open RAN Alliance
O-DU - Open Distributed Unit
O-CU - Open Central Unit
O-RU - Open Radio Unit
OS - Operating System
GPU - Graphics Processing Unit
API - Application Programming Interface
SMO - Service Management and Orchestration
DMS - Deployment Management Services
NF - Network Function
IMS - Infrastructure Management Services
COTS - Commercial Off-The-Shelf
CaaS - Containers as a Service
CPU - Central Processing Unit
UE - User Equipment
BS - Base Station
ABS - Advanced Base Station
BTS - Base Transceiver Station
BSS - Basic Service Set
ESS - Extended Service Set
AP - Access Point
NB - Node B (Radio Base Station Receiver)
eNB - Evolved Node B
gNB - Next-Generation Node B
TRP - Transmission and Reception Point
PS - Processing Server
TE - Terminal Equipment
MS - Mobile Station
MT - Mobile Terminal
UT - User Terminal
SS - Subscriber Station
PDA - Personal Digital Assistant
CDMA - Code Division Multiple Access
FDMA - Frequency Division Multiple Access
TDMA - Time Division Multiple Access
OFDMA - Orthogonal Frequency Division Multiple Access
SC-FDMA - Single Carrier Frequency Division Multiple Access
MC-FDMA - Multicarrier Frequency Division Multiple Access
UTRA - Universal Terrestrial Radio Access
GSM - Global System for Mobile Communications
GPRS - General Packet Radio Service
EDGE - Enhanced Data Rates for GSM Evolution
IEEE - Institute of Electrical and Electronics Engineers
E-UTRA - Evolved UTRA
UMTS - Universal Mobile Telecommunications System
E-UMTS - Evolved UMTS
3GPP - 3rd Generation Partnership Project
DL - Downlink
UL - Uplink
LTE - Long Term Evolution (4G)
LTE-A - LTE-Advanced
NR - New Radio (5G)
FDD - Frequency Division Duplex
TDD - Time Division Duplex
CRS - Cell-specific Reference Signal
CSI-RS - Channel State Information Reference Signal
FPGA - Field-Programmable-Gate-Array
ASIC - Application-Specific-Integrated-Circuit
DSP - Digital-Signal-Processor
CD-ROM - Compact Disc Read-Only Memory
DVD-ROM - Digital Versatile Disc Read-Only Memory
ROM - Read-Only Memory
RAM - Random-Access Memory
EEPROM - Electrically Erasable Programmable Read-Only Memory
EPROM - Erasable Programmable Read-Only Memory

### Background

Open RAN is a technology architecture concept directed to decoupling the hardware and software components of a Radio Access Network (RAN). It is a RAN that includes open interoperable interfaces and virtualization. In prior art (Non-Open) RANs, the hardware and software components are typically proprietary. Non-Open RAN equipment is generally obtained from a single vendor to ensure seamless functionality, security, and efficiency. In contrast, Open RAN introduces open standards for both hardware and software, enabling interoperability among various network elements. For Mobile Network Operators (MNOs), Open RAN holds strategic importance as it promotes vendor diversity, allowing the integration of new suppliers and enhancing supply chain resilience. It also brings energy efficiency gains by enabling targeted improvements in specific areas of the RAN. Furthermore, Open RAN facilitates innovation and competition by providing a more dynamic and efficient network environment. Additionally, it provides an opportunity for collaboration with specialist suppliers and facilitates resource optimization by allowing upgrades to software, without necessitating hardware replacements. Open RAN is important in the long-term network innovation strategy of MNOs, offering energy efficiency, supply chain diversification, resilience enhancement, and facilitating innovation and competition.

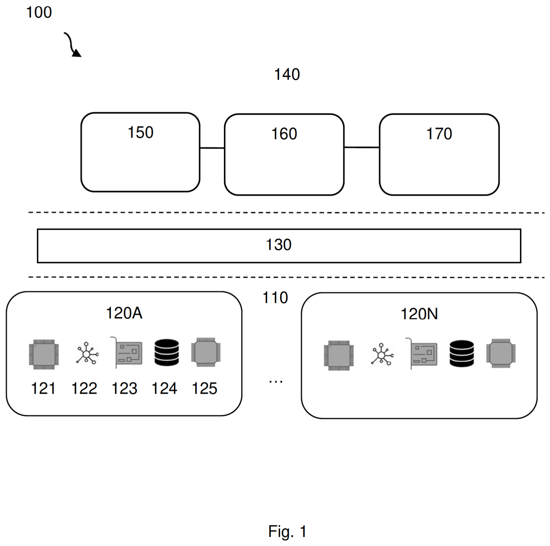

Fig. 1 illustrates some of the elements of an example Open RAN system 100, which is implemented as a cloud computing platform (O-Cloud). The system 100 may be described with reference to different hardware and software layers of the platform.

At the O-Cloud Node layer 110, the system comprises one or more physical infrastructure nodes 120A, 120N that meet O-RAN requirements. Each physical infrastructure node 120A comprises computing 121, networking 122, GPU 123, and storage 124 components, alongside acceleration technologies 125 for RAN operations (such as forward error correction and other computationally intensive operations that are offloaded to dedicated hardware). Each physical infrastructure node 120A, 120N is configured to host the relevant O-RAN network functions 150, 160, which are implemented at the Open RAN application layer 140. The network functions 150, 160 implemented at the Open RAN application layer 140 may include O-CU 160, O-DU 150, and O-RU.

At the O-Cloud hypervisor or containers / OS layer 130, there exists a collection of cloud functions to enable the Open RAN applications 150, 160 to run on the one or more O-Cloud hardware nodes 120A. The cloud functions may comprise supporting software components, such as an operating system, Containers (stand-alone executable software packages), a Container Orchestration Platform (such as Kubernetes), a container runtime, and the like. The cloud functions may also include the corresponding management and orchestration functions.

The O-Cloud serves as a fundamental component for facilitating cloud computing capabilities within the context of RAN network functions. It comprises both hardware and software elements. In particular, its software exposes open APIs, fostering interoperability and flexibility across various vendor solutions. With a decoupled architecture, the O-Cloud allows for sourcing hardware from different vendors, promoting neutrality and flexibility in hardware selection. It supports Service Management and Orchestration (SMO), enabling homing decisions and selecting Deployment Management Services (DMS) for Network Function (NF) Deployments. The DMS handles workload placement, lifecycle management, and resource allocation within O-Cloud Node Clusters, while Infrastructure Management Services (IMS) ensure the infrastructure's availability, reliability, and performance. Moreover, the O-Cloud offers automation capabilities, enhancing efficiency and reducing manual intervention, ultimately supporting efficient resource utilization and scalability for RAN network functions in a cloud-native environment.

The O-Cloud provides a fundamental platform for Open RAN that enables containerized RAN software to be implemented onto any COTS hardware. In order to support Open RAN applications, the O-Cloud implements Containers as a Service (CaaS) and. One of the important functionalities of the O-Cloud platform is to schedule different RAN workloads (running in respective Pods) and assign hardware resources (such as Compute, Storage and Networking resources).

In existing O-Cloud solutions, the workload scheduler will assign hardware resources (i.e. number of CPUs, storage, etc.) based on the requirements of the RAN software. When the CPU/storage is insufficient to support the workload, the O-Cloud scheduler will scale up to assign more CPU/storage to certain Pods. When the pod workload is reduced, the O-Cloud scheduler will scale down to reduce the CPU/storage resource. The scale up/scale down is triggered by the application and actual workload. In this way, hardware resources may be flexibly allocated to each application process. Some RAN applications take full advantage of the flexibility provided by the cloud platform and request significant additional resources for extra functionality. However, in some cases, this may lead to the RAN application monopolising the available resources. The workload scheduler may allocate such a high proportion of the available hardware resources to one application process that the workload scheduler is unable to allocate sufficient resources to other applications or even to perform its own functionality correctly. The present disclosure aims to address this issue.

### Summary

A method of managing hardware resources in an Open Radio Access Network, Open RAN, cloud platform is provided. The cloud platform is configured to host an Open RAN application. The Open RAN application may comprise one or more application processes. The method may comprise communicating, from a master node of the cloud platform to the Open RAN application, hardware resource status data.

The cloud platform may be configured to host the Open RAN application at a radio site. The method may comprise communicating hardware resource status data from a master node of the cloud platform to the Open RAN application at the radio site. In other words, the physical servers of the cloud platform may be located in the same geographic location as radio equipment controlled by the RAN application (e.g., the physical antennas associated with the O-RU of the base station).

The master node may be a Kubernetes (RTM) master node.

The Open RAN application may be one of a plurality of Open RAN applications hosted by the cloud platform (e.g., at the radio site).

The hardware resource status data may be communicated via a representational state transfer application programming interface, REST API.

A REST API is a convenient way to communicate the hardware resource status data. Advantageously, a REST API is relatively straightforward to implement. Nevertheless, the interface could be any API.

The API (e.g., REST API) may be used for communicating alarms from the master node of the cloud platform to the Open RAN application in some examples. However, the API may also be used for other purposes. For example, alarms may trigger logs, which may also be communicated via the API. The API may be used for communication of a variety of hardware resource status data. The API may be beneficial to enable the platform to quickly identify and locate issues.

The hardware resource status data may comprise log data.

Advantageously, by communicating log data between the cloud platform and the RAN application, platform logs may be included in application logs and vice versa. Logs may be used to correlate CaaS layer activity between application layer activity, which can help to diagnose issues. As a result, software issues may be debugged more easily.

The hardware resource status data may comprise hardware resource utilisation statistics.

The hardware resource utilisation statistics may comprise a hardware resource utilisation associated with each of the application process.

The hardware resource status data may comprise an alarm indicating that a hardware resource utilisation associated with the Open RAN application is above a threshold.

The method may further comprise communicating, from the Open RAN application to the master node of the cloud platform, an indication that the Open RAN application has received the alarm and is taking action to reduce the hardware resource utilisation associated with the Open RAN application.

One or more of the described methods may be performed by the cloud controller.

The master node may be a first master node in active mode. The cloud platform may further comprise a second master node in standby mode. The cloud platform may be configured to perform a master node switchover action on detection of a cloud platform performance condition, unless the master node switchover action is suppressed. The master node switchover action may comprise switching the first master node to standby mode and switching the second master node to active mode. The method may further comprise identifying the cloud platform performance condition. The method may further comprise suppressing the master node switchover action (e.g., for a predetermined period of time), based on the indication that the Open RAN application has received the alarm and is taking action to reduce the hardware resource utilisation associated with the Open RAN application.

The master node switchover action is normally performed automatically on detection of an issue to try and resolve the issue. For example, if the master node runtime has suspended (e.g., due to a software fault), switching the standby master node to active may resolve the issue. However, where the issue has arisen as a result of resource starving, the switchover action will not address the issue (and just causes further instability).

Both servers may have the same number of CPU cores, and the resources may be shared between the servers. Therefore, switching the master node between servers may not address the issue.

In other words, the cloud platform may suppress the master node switchover action, even though there is a problem (e.g., with the heartbeat). The cloud platform may determine that the RAN application is a likely cause of the performance condition (e.g., by linking the performance condition to the alarm). The cloud platform may further determine that the RAN application is taking action to remedy the situation (e.g., by identifying the indication that the Open RAN application has received the alarm and is taking action to reduce the hardware resource utilisation associated with the Open RAN application) and that the performance condition may therefore soon be resolved, without the need for a switchover.

The first and second master nodes may be Kubernetes master nodes.

The cloud platform performance condition may comprise a loss of synchronisation of a heartbeat signal between the first master node in active mode and the second master node in standby mode.

The cloud platform may comprise a plurality of servers. A first server of the plurality of servers may comprise the first master node. A second server of the plurality of servers may comprise the second master node.

The method may further comprise measuring a hardware resource utilisation associated with each of the application processes (i.e., on a pod-level).

The hardware resource utilisation statistics and/or log data may comprise the hardware resource utilisation associated with each of the application processes.

The hardware resource utilisation associated with the Open RAN application may be calculated based on the hardware resource utilisation associated with each of the application processes.

The method may further comprise calculating the hardware resource utilisation associated with the Open RAN application, based on a hardware resource utilisation associated with each of the application processes

The method may further comprise determining that the hardware resource utilisation associated with the Open RAN application is above the threshold.

The cloud platform may comprise a plurality of processor cores. Each application process may be allocated zero or more cores. The hardware resource utilisation associated with each of the application processes may be determined based on a central processing unit, CPU, usage of the zero or more cores allocated to the respective application process.

One or more of the plurality of processor cores may be dedicated cores allocated to a manager of the cloud platform.

Each of the plurality of processor cores that are not the one or more dedicated cores may form a resource pool. Dynamically allocating zero or more processor cores of the plurality of processor cores to each of the plurality of application processes may comprise dynamically allocating the zero or more processor cores from the resource pool to each of the plurality of application processes.

The cloud platform may comprise one or more servers (preferably a plurality of servers). The plurality of processor cores may comprise a respective plurality of processor cores from each server.

The cloud platform may be a containerised cloud platform. Each of the application processes may be hosted via a respective pod managed by the containerised cloud platform.

One or more of the described methods may be performed by the RAN application

The method may further comprise reducing processing requirements of the Open RAN application to reduce the hardware resource utilisation associated with the Open RAN application, based on the alarm (i.e., responsive to the alarm).

Reducing processing requirements of the Open RAN application may comprise reducing a frequency of a probe for collection of network performance metrics associated with the Open RAN application.

In this context, "network performance metrics" may be understood to refer to performance metrics associated with a telecommunications network that the RAN application is serving (i.e., relating to the radio network of the base station), rather than the network providing connectivity to the cloud platform (likely a fixed line network).

The method may further comprise calculating a hardware resource utilisation associated with the Open RAN application, based on the hardware resource utilisation associated with each application process, and determining whether the hardware resource utilisation associated with the Open RAN application is above the threshold. The remedial action may be taken in response to the determination, instead of the alarm. In other words, the application may self-regulate based on the hardware resource status data.

A cloud platform configured to perform the methods described above is also provided.

An Open Radio Access Network, Open RAN, application is also provided. The Open RAN application comprises instructions that, when executed on a processor, cause the processor to perform the methods described above.

A computer program is also provided. The computer program comprises instructions that, when executed on a processor of a cloud platform, cause the cloud platform to perform the methods described above.

Further illustrative examples of embodiments of the invention are outlined in the following numbered clauses:
1. A method of managing hardware resources in an Open Radio Access Network, Open RAN, cloud platform, wherein the cloud platform is configured to host an Open RAN application at a radio site, wherein the Open RAN application comprises one or more application processes, the method comprising:
   communicating, from a master node of the cloud platform at the radio site to the Open RAN application, hardware resource status data.
2. The method of clause 1, wherein the Open RAN application is one of a plurality of Open RAN applications hosted by the cloud platform at the radio site.
3. The method of clause 1 or clause 2, wherein the hardware resource status data is communicated via a representational state transfer application programming interface, REST API.
4. The method of any preceding clause, wherein the hardware resource status data comprises log data.
5. The method of any preceding clause, wherein the hardware resource status data comprises hardware resource utilisation statistics.
6. The method of clause 5, wherein the hardware resource utilisation statistics comprise a hardware resource utilisation associated with each of the application process.
7. The method of any preceding clause, wherein the hardware resource status data comprises an alarm indicating that a hardware resource utilisation associated with the Open RAN application is above a threshold.
8. The method of clause 7, further comprising:
   communicating, from the Open RAN application to the master node of the cloud platform, an indication that the Open RAN application has received the alarm and is taking action to reduce the hardware resource utilisation associated with the Open RAN application.
9. The method of clause 8, wherein the master node is a first master node in active mode and wherein the cloud platform further comprises a second master node in standby mode, wherein the cloud platform is configured to perform a master node switchover action on detection of a cloud platform performance condition, unless the master node switchover action is suppressed, wherein the master node switchover action comprises switching the first master node to standby mode and switching the second master node to active mode, the method further comprising:
   identifying the cloud platform performance condition; and
   suppressing the master node switchover action, based on the indication that the Open RAN application has received the alarm and is taking action to reduce the hardware resource utilisation associated with the Open RAN application.
10. The method of clause 9, wherein the cloud platform performance condition comprises a loss of synchronisation of a heartbeat signal between the first master node in active mode and the second master node in standby mode.
11. The method of any of clauses 4 to 10, further comprising:
   measuring a hardware resource utilisation associated with each of the application processes,
   wherein the hardware resource utilisation statistics and/or log data comprise the hardware resource utilisation associated with each of the application processes, and/or
   wherein the hardware resource utilisation associated with the Open RAN application is calculated based on the hardware resource utilisation associated with each of the application processes.
12. The method of clause 11, wherein the cloud platform comprises a plurality of processor cores, wherein each application process is allocated zero or more cores, wherein the hardware resource utilisation associated with each of the application processes is determined based on a central processing unit, CPU, usage of the zero or more cores allocated to the respective application process.
13. The method of clause 12, wherein one or more of the plurality of processor cores are dedicated cores allocated to the cloud platform.
14. The method of clause 13, wherein each of the plurality of processor cores that are not the one or more dedicated cores form a resource pool, wherein dynamically allocating zero or more processor cores of the plurality of processor cores to each of the plurality of application processes comprises dynamically allocating the zero or more processor cores from the resource pool to each of the plurality of application processes.
15. The method of any of clauses 12 to 14, wherein the cloud platform comprises one or more servers, wherein the plurality of processor cores comprises a respective plurality of processor cores from each server.
16. The method of any preceding clause, wherein the cloud platform is a containerised cloud platform and wherein each of the application processes is hosted via a respective pod managed by the containerised cloud platform.
17. The method of clause 7 or clause 8, further comprising:
   reducing processing requirements of the Open RAN application to reduce the hardware resource utilisation associated with the Open RAN application, based on the alarm.
18. The method of clause 17, wherein reducing processing requirements of the Open RAN application comprises reducing a frequency of a probe for collection of network performance metrics associated with the Open RAN application.
19. A cloud platform configured to perform the method of any of clauses 1 to 16.
20. An Open Radio Access Network, Open RAN, application comprising instructions that, when executed on a processor, cause the processor to perform the method of any of clauses 1 to 8 or 17 to 18.
21. A computer program comprising instructions that, when executed on a processor of a cloud platform, cause the cloud platform to perform the method of any of clauses 1 to 16.

### Brief description of the drawings

Fig. 1 illustrates an example cloud platform.
Fig. 2 illustrates the differences between Single (Non-Open) RAN and Open RAN.

The invention will be described with reference to the non-limiting examples illustrated in the following Figures.
Fig. 3 illustrates an example OpenRAN CaaS Layer Architecture.
Fig. 4 illustrates a specific example of CPU core allocation.
Fig. 5 illustrates a flowchart of a method according to a specific example.
Fig. 6 illustrates a cloud platform according to a specific example.

### Detailed description

Prior to Open RAN, mobile networks were built by a small number of vendors with tightly coupled hardware and software. Interoperability between equipment from different vendors was restricted and this arrangement resulted in limited flexibility and innovation. It is an aim of Open RAN to improve the traditional model by decoupling hardware and software components. This enables greater flexibility, innovation, and cost-effectiveness in building and operating mobile networks.

In some Single RAN prior art examples, 2G, 4G and 5G RAN applications may all run on a single server. This may lead to a lack of scalability, which is addressed in Open RAN examples.

As described above, the Open RAN system decouples hardware and software in the RAN network and allows hardware and software components to be provisioned separately. In order to do so, new standards for interactions between the hardware and software components of the Open RAN system have been provided by the Open RAN Alliance (the term "O-RAN" generally refers to standards specified by the Open RAN Alliance).

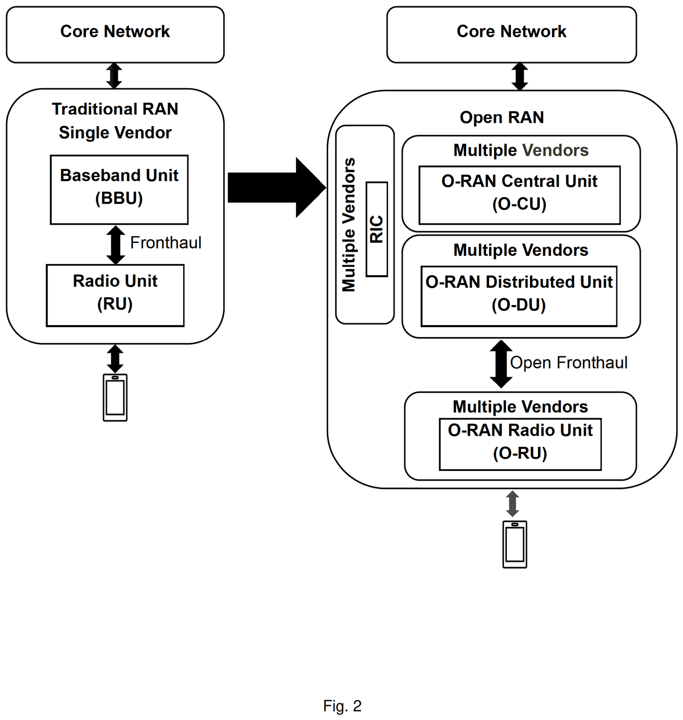

Fig. 2 illustrates the differences between Single (Non-Open) RAN and Open RAN. By moving from a Single RAN to an Open RAN, the following benefits may be achieved:
Disaggregation;
Decoupling HW from SW;
Open Ecosystem;
Open Interfaces; and
Intelligent Management.

Open RAN enables interoperability for hardware and software elements provided by different suppliers. By doing so, Open RAN also provides resilience for the MNO by promoting supplier diversity in the network. If elements from a specific supplier cease to function correctly or need to be removed permanently or temporarily (e.g., due to security or performance requirements), elements from another supplier may be relied upon instead, without major disruption to the network.

Open RAN also offers potential energy efficiency improvement, for example through flexible provisioning of hardware to meet network requirements.

Open RAN enables Functional Block Separation where the baseband processing functions are separated into distinct blocks, allowing various vendors to contribute and innovate. To achieve true interoperability and innovation, this however requires solutions from different vendors to work together seamlessly. Ensuring seamless interoperability between hardware and software components across competing vendors is crucial for the success of Open RAN. The disaggregation of RAN functions into software-based components that can be hosted on different processor architectures introduces interoperability challenges while managing and orchestrating these functions.

The cloud platform, which is sometimes referred to as the "O-Cloud", serves as a fundamental component of the Open RAN system. The cloud platform comprises hardware and software components. The hardware components of the cloud platform include physical infrastructure nodes arranged in one or more node clusters (also referred to as "server nodes"). These provide the hardware resources that are needed to support the network function deployments (e.g., O-RU, O-DU and O-CU), which are implemented in software applications (also referred to as "client nodes") running on the cloud platform hardware.

The physical infrastructure nodes of the cloud platform (server nodes) comprise the physical hardware resources required to support the network function deployments, while the software applications (client nodes) define the functionality of the network function deployments.

To facilitate interoperability and create an environment for competition and innovation, one characteristic of virtualized and open RAN is that multiple hardware and software vendors can coexist within an operator's RAN domain. Standards and interfaces are defined to enable interworking.

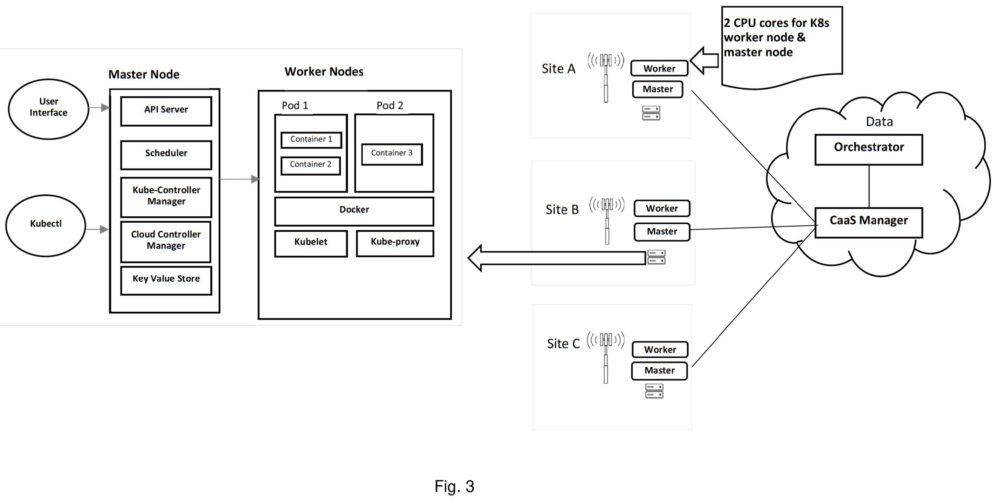

Fig. 3 illustrates an example OpenRAN CaaS Layer Architecture. As shown in Fig. 3, each radio site has one or more Kubernetes Master Nodes and one or more Worker Nodes. 2 CPU cores may be reserved for each Kubernetes worker node and master node.

The Master node defines the Kubernetes control plane and is responsible for managing the worker node and the Pods in the cluster. In the illustrated example, the master node comprises an API server, scheduler, Kube-controller manager, cloud controller manager and a key value store. The master node also exposes a user interface and a command line interface (Kubectl).

The one or more worker nodes host the container pods that are the components of the application workload. In the illustrated example, the worker node could onboard or support running a pair of RAN application pods i.e., a first pod and a second pod. The first pod comprises a first container and a second container. The second pod comprises a third container. The worker node further comprises components such as a docker, a Kubelet and a Kube-proxy.

In some OpenRAN deployments, CaaS (container as a service) layer instability issues (e.g. Kubernetes control plane switch over) are created by particular OpenRAN applications. In some specific examples, the 2G GSM RAN application disturbs the cloud platform stability and impacts network performance for this RAN application and other RAN applications on the cloud platform. This instability may adversely impact customer experience.

Root cause analysis performed on these instability issues identified that Kubernetes controller switch over is not due to an issue originating in the CaaS layer, but because the RAN application (in particular examples, the GSM probe of the GSM RAM application) uses CPU resources excessively. At least 2 CPU are required to be reserved for CaaS layer/Operating System. However, excessive use of CPU resources by RAN applications means that only limited CPU resources are left for the CaaS layer. Due to CaaS layer resource starving, the Kubernetes controller may experience loss of synchronisation in the heartbeat signal between the active and standby master nodes. This loss of synchronisation triggers the Kubernetes master node to switch over (i.e., the master node in active mode switches to standby and the master node in standby mode switches to active). This problem has been observed in live deployments.

Normally, synchronisation between active and standby master nodes is unaffected by resource utilisation of the RAN applications. However, some RAN application processes may take up too many resources.

In a specific example, the GSM probe responsible for collecting performance metrics and sending these to the base station controller at the datacentre may use excessive resources. The 4G and 5G RAN applications running in the same cluster may have CPUs that are dedicated to the RAN workload of those applications. Therefore, the GSM probe cannot access those resources (even if they are under-used) and instead takes the CPU workload from the CPU pool. This can lead to CPU starving for the platform, which may lead to a loss of heartbeat synchronisation and trigger switchover.

The switchover of active/standby master nodes is supposed to be smooth. However, a switchover due to loss of heartbeat synchronisation may cause instability of the CaaS platform, which impacts the KPI of the RAN applications (especially the 2G GSM KPI itself).

In some examples, the CPU cores that are assigned for the CaaS layer (for the master node) are not strictly reserved and dedicated to the CaaS layer but are somewhat shared. These CPU cores are in the shared CPU pool. Therefore, resource starving can have a pronounced effect on CaaS layer stability.

In other examples, the 2 CPU cores assigned to the CaaS layer are truly dedicated and reserved. Nevertheless, the GSM probes may use the other pooled resources at an excessively high level, which can cause instability in any case.

In some examples, CaaS platforms are configured to prioritise the applications they are hosting, at the expense of CaaS layer functionality, which may be delayed or scaled down. However, loss of some functionality (e.g., heartbeat synchronisation) has a significant impact on the overall platform. Some CaaS platforms are unable to prioritise specific CaaS platform functionality at the expense of available resources for the hosted applications.

The problem of application processes causing instability may be intermittent. For example, the utilisation of the GSM probe may not cause problems all the time, but issues may surface at time intervals. This may be because the probes collect metrics by time interval.

When the GSM probe is unnecessarily using CPU and triggering switchover, the platform may seem ok for a while following the switchover. Then, the same problem may be observed for the new active master node.

Where CaaS layer instability is observed, the OS system may not be stable. This may impact other applications hosted by the platform, even those that are not using significant quantities of hardware resources.

The proposed methods address these issues by communicating hardware resource status data between the cloud platform master node and the RAN application. The RAN application may set a resource utilization threshold for particular applications or sub-functions. For example, the 2G GSM RAN application may enforce a CPU utilisation limit for the 2G GSM probe.

Prior art CaaS platforms currently offer no visibility to the applications of how much resource each pod is using. Therefore, specific examples of the proposed methods provide a resource usage visibility metric. In this way, hardware resource usage data, such as the CPU utilisation of each pod may be provided to the RAN application layer. The CaaS layer has visibility of resource utilisation per pod and the proposed methods may extend this visibility to the application layer.

Application developers can improve the application based on the new data from the platform. The new data may comprise alarms, logs, CPU usage, and the like, which are sent to application over the API.

As described above, the cloud platform may share the hardware resource status data with the RAN application and rely on the RAN application to police the resource utilisation. Alternatively, the CaaS layer may send an alarm notification to the RAN application if a CPU utilisation threshold is reached. The RAN application may receive the alarm and reduce the probe activity. The CaaS layer may send the alarm notification via a REST API. In this way, the RAN application may avoid excessive resource utilisation and thus avoid the Kubernetes controller resource starving & triggering switching over.

Alarms may be configured to be triggered by a number of different events. For example, if the 2G GSM pod utilisation is above 80%, this may trigger an alarm. The alarm may be sent through the REST AIP the 2G GSM application, to inform the application of the issue. The application may receive the alarm and adjust its data collection/optimisation behaviour to reduce the CPU usage caused by the 2G probe and send a confirmation back to the CaaS platform. In response, the CaaS platform may make sure that switchover does not happen unnecessarily (or too often).

The CaaS layer may have access to metrics at the pod level (e.g., the CPU statistics). In other words, the CaaS layer does not only know the GSM CPU utilisation but knows the CPU utilisation for all pods.

The alarm threshold may be configurable. For example, the threshold may be 90% of the dedicated resources or may be 80% if pool resources are being used. The GSM CPU metrics percentage may indicate how much of the dedicated resources are being utilised at the pod level, which may change depending on how many CPU pool resources are allocated. Therefore, the percentage threshold may be configured differently at the pod level, depending on the application requirements.

If the threshold is exceeded, the RAN application may address the issue by reducing the probe interval, for example.

In the above examples, the probe for GSM performance metrics was found to use excessive CPU resources. This may have been caused by the probe running too frequently. The specific example related to the 2G GSM RAN application. However, this issue is not unique to the 2G GSM RAN application and could occur in any RAN application.

In some examples, 4G and 5G RAN applications may contribute to instability. These RAN applications may assign dedicated pods for CPUs, even if the pods have no workload running. Therefore, these RAN applications may also contribute to resource starving by limiting the resources available in the pool.

The proposed methods may be implemented in the CaaS platform, in the RAN application, or (preferably) both. The CaaS platform may monitor resource utilisation and send an alarm to the RAN application if the resource utilisation exceeds a threshold. The GSM RAN application may receive the alarm and reduce resource utilisation in response.

In another example, the CaaS platform may send resource utilisation data to the RAN application. The RAN application may monitor resource utilisation, identify if the resource utilisation exceeds a threshold, and reduce resource utilisation in response.

In existing CaaS cloud platforms, there is currently no communication of hardware resource status data (e.g., resource utilisation statistics and/or alarms) between the CaaS layer and the RAN application. Therefore, the RAN application may be unaware of any issues created in the cloud platform by the excessive resource utilisation. The proposed methods provide a communication mechanism for this data between the platform and the application. The communication mechanism may be provided in the form of an API, such as a REST API.

In addition to addressing the issues identified, the proposed methods may also improve debugging of RAN applications and CaaS layer issues, by sharing logs between the RAN applications and the CaaS layer. In prior art single RAN, all the components are provided by the same vendor. These components have hardware in which internal communications are built in and are therefore easy to debug. In contrast, debugging information is not so freely shared between elements in some prior art OpenRAN ecosystems. Examples of the proposed methods address this issue by sharing logs over the new API.

As well as alarms and logs, the CaaS layer may also provide statistics via the API to the application layer.

RAN Applications may be modified to receive and process the hardware resource status data from the CaaS layer and take appropriate action. For example, the RAN application may monitor and respond to alarms, incorporate CaaS logs in its own logs and/or analyse statistics.

In a specific example, the CaaS layer master node may receive confirmation from the RAN application layer that the RAN application has received the alarm and is taking action to remedy the excessive CPU usage. The CaaS master node can receive this confirmation and understand that the RAN application (e.g., the 2G GSM application) is taking action to remedy the excessive CPU usage. Therefore, the CaaS master node may suppress switchover to the standby master node, even though there may be a problem with the heartbeat between the master nodes.

It should be noted that the CaaS layer may not actively suppress the switchover in all circumstances. Legitimate issues should still cause the master node switchover to be performed. However, the CaaS layer does not trigger a switchover in response to issues that have an identifiable cause that is already being remedied by the RAN application. In this way, unnecessary instability is avoided. However, instability caused by genuine issues may still be addressed by switchover in the usual way.

The GSM RAN application may be allocated hardware resources on the on same server as the active master node (e.g., server 1). Excessive CPU utilisation on server 1 may lead to resource starving and directly affect the active master node. However, this issue may also arise where the GSM RAN application is allocated hardware resources on a different server to the active master node. Resources are shared between servers so excessive CPU usage on any of the servers can lead to resource starving for the active master node. Moreover, the heartbeat is bi-directional between the active master node and the standby master node, so any resource starving on the same server as the standby master node (e.g., server 2) may also lead to loss of synchronisation of the heartbeat signal.

In a specific example, the active master node manages one cluster on the servers. However, the hardware resources are pooled and are located on a plurality of different servers. The issue (e.g., loss of heartbeat synchronisation) may be triggered because an application process (e.g., the 2G GSM probes) use excessive CPU cores and CPU utilisation reaches certain threshold. This may lead to resource starving and trigger switchover from active master node to standby master node on a different server. This unnecessary switchover can lead to further instability and loss of service quality for users. The root cause of the issue is twofold: 1) the RAN application uses excessive resources and is unaware of the impact this has on the CaaS layer; and 2) the CaaS layer is too sensitive to issues caused by application resource starving and triggers switchover unnecessarily. The proposed methods address the first of these issues by sharing hardware resource status data from the CaaS layer to the application layer. The proposed methods address the second issue by the CaaS layer receiving confirmation that the RAN application is taking action and suppressing switchover.

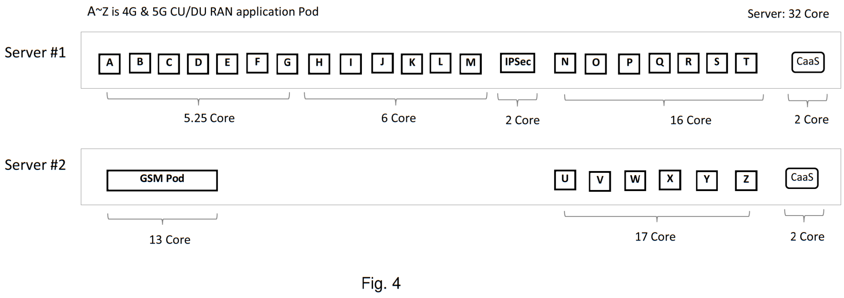

A specific example of CPU core allocation is illustrated with reference to Fig. 4. As shown in Fig. 4, the cloud platform may comprise 2 servers each having 32 cores. 2 cores on each server may be allocated to the CaaS layer (e.g., the active master node on server 1 and the standby master node on server 2).

As illustrated in Fig. 4, server 1 may be used to deploy Pods for 4G and 5G, and GSM pods may be allocated on server 2. Some RAN application vendors request dedicated CPU resources for each Pod allocation. Therefore, as can be seen on server 1, only 2 CPU cores remain on server 1 for the CaaS layer and there is almost no CPU pool at all. This can lead to a lack of flexibility and resource starving.

The master node manages the workload of the pods. The master node can schedule tasks using the resources on either server 1 or server 2. Server 1 has an active master node and server 2 has a standby master node. Both servers have a small amount of CPU resources in a resource pool for scheduling.

In some prior art Kubernetes Open RAN deployments, the master node is located in a remote datacentre, whilst the worker nodes are located in the edge network. This ensures adequate resources for the master node but may introduce issues with latency between the master node and worker nodes. In contrast, the proposed systems provide master and worker nodes on same server cluster, in the edge network.

In some specific examples, the proposed methods employ a single node solution, in which only one worker node is provided per cluster (per edge deployment of geographically co-located servers).

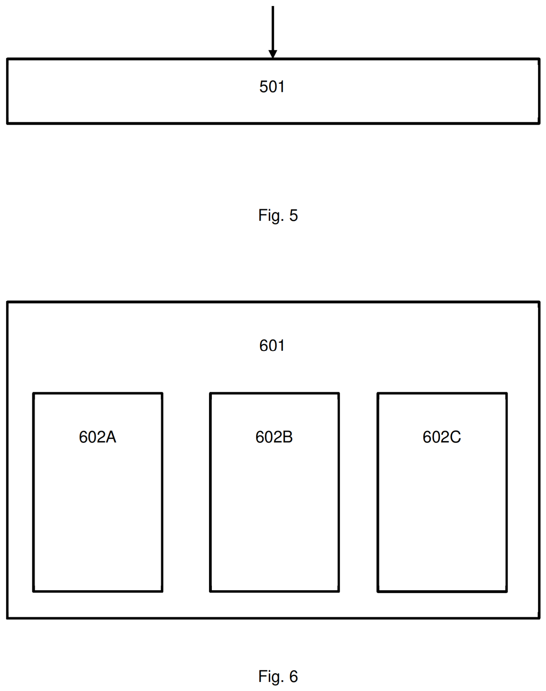

Fig. 5 illustrates a flowchart of an example method of managing hardware resources in an Open RAN cloud platform comprising a plurality of processor cores. The cloud platform is configured to host a plurality of application processes. The method comprises:
at step 501: dynamically allocating zero or more processor cores of the plurality of processor cores to each of the plurality of application processes, based on processing requirements of the respective application process.

Fig. 6 illustrates a cloud platform 601 according to a specific example. The cloud platform 601 comprises a plurality of processor cores 602A, 602B, 602C.

Although specific embodiments have now been described, the skilled person will understand that various modifications and variations are possible. For example, whilst the disclosure is described in relation to existing network architecture, it will be understood that changes to the architecture (and/or nomenclature) are possible, but the present disclosure may still be applicable in this case. All of the features disclosed herein may be combined in any combination, even if that combination has not been explicitly detailed, except combinations where at least some of such features and/or steps are mutually exclusive. In particular, the preferred features of the invention are applicable to all aspects of the invention and may be used in any combination. Likewise, features described in non-essential combinations may be used separately (not in combination).

A base station (BS) generally refers to a fixed station that performs communication with a UE and/or another BS, and exchanges various kinds of data and control information with the UE and another BS. The BS may be referred to as an advanced base station (ABS), a base transceiver station (BTS), a radio base station, a radio transceiver, a transceiver function, a basic service set (BSS), an extended service set (ESS), an access point (AP), a Node B (NB), an eNode B (eNB), a gNode B (gNB), a transmission and reception point (TRP), a processing server (PS), or some other suitable terminology, depending on the protocol, standard, context or technology. In some examples, a base station may include two or more transceivers that may or may not be collocated. Each transceiver may communicate on the same or different carrier frequency within the same or different frequency band.

Where this application refers to a server or network entity, for instance, this may actually be a pair of servers, or network entities (primary and failover), for redundancy.

Examples of mobile devices include various devices that transmit and receive user data and/or various kinds of control information to and from a base station. The mobile device may be referred to as a user equipment (UE), terminal equipment (TE), a mobile station (MS), a mobile terminal (MT), a user terminal (UT), a subscriber station (SS), a wireless device, a personal digital assistant (PDA), a wireless modem, a handheld device, etc.

Whilst the above methods are described in relation to a specific networks in some examples, (such as a 4G/LTE or 5G/NR network), these methods, techniques, apparatuses, and systems may be applied to a variety of wireless multiple access systems. Examples of the multiple access systems include CDMA, FDMA, TDMA, OFDMA, SC-FDMA, and MC-FDMA. CDMA may be embodied through radio technology such as UTRA or CDMA2000. TDMA may be embodied through radio technology such as GSM, GPRS, or EDGE. OFDMA may be embodied through radio technology such as IEEE 802.11 (Wi-Fi), IEEE 802.16 (WiMAX), IEEE 802.20, or E-UTRA. UTRA is a part of a UMTS. 3GPP LTE is a part of E-UMTS using E-UTRA. 3GPP LTE employs OFDMA in DL and SC-FDMA in UL. LTE-A is an evolved version of 3GPP LTE. 3GPP NR employs OFDMA for both downlink and uplink and can operate in both FDD and TDD. For convenience of description, it is assumed that the present invention is applied to 3GPP NR. However, the technical features of the present invention are not limited thereto. For example, although the following detailed description is given based on a mobile communication system corresponding to a 3GPP NR system, aspects of the present invention that are not specific to 3GPP NR are applicable to other mobile communication systems.

A cellular communications system comprises a plurality of cells. A cell refers to a geographical area to which one or more nodes provide a communication service. Accordingly, communicating with a specific cell may mean communicating with an gNB or a node which provides a communication service to the specific cell. Furthermore, channel status/quality of a specific cell refers to channel status/quality of a channel or communication link formed between an gNB or node which provides a communication service to the specific cell and a UE. The UE may measure DL channel state received from a specific node using cell-specific reference signal(s) (CRS(s)) transmitted on a CRS resource and/or channel state information reference signal(s) (CSI-RS(s)) transmitted on a CSI-RS resource, allocated by antenna port(s) of the specific node to the specific node. Meanwhile, a 3GPP system uses the concept of a cell in order to manage radio resources and a cell associated with the radio resources is distinguished from a cell of a geographic region.

The examples may be carried out on any suitable data processing device, such as a personal computer, laptop, mobile telephone, server, virtual machine, and the like. The above description of the systems and methods has been simplified for purposes of discussion, and is intended to provide a specific example to illustrate the invention. Different types of systems and methods may be used, as will be appreciated by the skilled person. It will be appreciated that the boundaries between logic blocks are merely illustrative and that alternative embodiments may merge logic blocks or elements, or may impose an alternate decomposition of functionality upon various logic blocks or elements.

It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more FPGAs, and/or one or more ASICs, and/or one or more DSPs, and/or other hardware arrangements. Method steps implemented in flowcharts contained herein, or as described above, may each be implemented by corresponding respective modules. Moreover, multiple method steps implemented in flowcharts contained herein, or as described above, may be implemented together by a single module.

Examples may be implemented by computer software or a "computer program." A storage medium and a transmission medium carrying the computer software are also provided. The computer software may comprise one or more instructions, or code, that, when executed by a computer, causes the methods described to be performed. Computer software may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM, or a Blu-ray disc), or a memory (such as a ROM, a RAM, EEPROM, EPROM, Flash memory or a portable/removable memory device), etc. The transmission medium may be a communications signal, a data broadcast, a communications link between two or more computers, etc.

The computer program may be configured to control a network entity and/or mobile device to perform any method according to the disclosure. A network entity of a telecommunications network (e.g., a cellular network) may also be provided, configured to operate in accordance with certain methods disclosed herein. For example, the network entity may include a processor and at least one communication interface, particularly comprising one or both of a transmitter and receiver. A mobile device (e.g., UE) may also be provided, configured to operate in accordance with certain methods disclosed herein. The mobile device may likewise include a processor and at least one communication interface, particularly comprising one or both of a transmitter and receiver.

Each feature disclosed in this specification, unless stated otherwise, may be replaced by alternative features serving the same, equivalent, or similar purpose. Thus, unless stated otherwise, each feature disclosed is one example only of a generic series of equivalent or similar features.

It will be understood that, although the terms "first", "second", etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

As used herein, including in the claims, unless the context indicates otherwise, singular forms of the terms herein are to be construed as including the plural form and vice versa. For instance, unless the context indicates otherwise, a singular reference herein including in the claims, such as "a" or "an" (such as a mobile device, a network entity, a step, a parameter, or a message) means "one or more" (for instance one or more mobile devices, one or more network entities, one or more steps, one or more parameters, or one or more messages). Throughout the description and claims of this disclosure, the words "comprise", "including", "having" and "contain" and variations of the words, for example "comprising" and "comprises" or similar, mean "including", and are not intended to (and do not) exclude other components.

The use of any and all examples, or exemplary language ("for instance", "such as", "for example" and like language) provided herein, is intended merely to better illustrate the invention, and does not indicate a limitation on the scope of the invention unless otherwise claimed. No language in the specification should be construed as indicating any non-claimed element as essential to the practice of the invention.

Any steps described in this specification may be performed in any order or simultaneously unless stated or the context requires otherwise. Moreover, where a step is described as being performed after a step, this does not preclude intervening steps being performed.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

Like numbers refer to like elements throughout. Thus, the same or similar numbers may be described with reference to other drawings even if they are neither mentioned nor described in the corresponding drawing. Also, elements that are not denoted by reference numbers may be described with reference to other drawings.

A method of manufacturing and/or operating any of the devices disclosed herein is also provided. The method may comprise steps of providing each of the features disclosed and/or configuring or using the respective feature for its stated function.

In the drawings and specification, there have been disclosed typical embodiments of the invention and, although specific terms are employed, they are used in a generic and descriptive sense only and not for purposes of limitation, the scope of the invention being set forth in the following claims.

## Claims

1. A method of managing hardware resources in an Open Radio Access Network, Open RAN, cloud platform, wherein the cloud platform is configured to host an Open RAN application at a radio site, wherein the Open RAN application comprises one or more application processes, the method comprising:
communicating, from a master node of the cloud platform at the radio site to the Open RAN application, hardware resource status data.

2. The method of claim 1, wherein the Open RAN application is one of a plurality of Open RAN applications hosted by the cloud platform at the radio site.

3. The method of claim 1 or claim 2, wherein the hardware resource status data is communicated via a representational state transfer application programming interface, REST API.

4. The method of any preceding claim, wherein the hardware resource status data comprises log data and/or hardware resource utilisation statistics; and
optionally, wherein the hardware resource utilisation statistics comprise a hardware resource utilisation associated with each of the application processes.

5. The method of any preceding claim, wherein the hardware resource status data comprises an alarm indicating that a hardware resource utilisation associated with the Open RAN application is above a threshold.

6. The method of claim 5, further comprising:
communicating, from the Open RAN application to the master node of the cloud platform, an indication that the Open RAN application has received the alarm and is taking action to reduce the hardware resource utilisation associated with the Open RAN application.

7. The method of claim 6, wherein the master node is a first master node in active mode and wherein the cloud platform further comprises a second master node in standby mode, wherein the cloud platform is configured to perform a master node switchover action on detection of a cloud platform performance condition, unless the master node switchover action is suppressed, wherein the master node switchover action comprises switching the first master node to standby mode and switching the second master node to active mode, the method further comprising:
identifying the cloud platform performance condition; and
suppressing the master node switchover action, based on the indication that the Open RAN application has received the alarm and is taking action to reduce the hardware resource utilisation associated with the Open RAN application;
optionally, wherein the cloud platform performance condition comprises a loss of synchronisation of a heartbeat signal between the first master node in active mode and the second master node in standby mode.

8. The method of any of claims 4 to 7, further comprising:
measuring a hardware resource utilisation associated with each of the application processes,
wherein the hardware resource utilisation statistics and/or log data comprise the hardware resource utilisation associated with each of the application processes, and/or
wherein the hardware resource utilisation associated with the Open RAN application is calculated based on the hardware resource utilisation associated with each of the application processes.

9. The method of claim 8, wherein the cloud platform comprises a plurality of processor cores, wherein each application process is allocated zero or more cores, wherein the hardware resource utilisation associated with each of the application processes is determined based on a central processing unit, CPU, usage of the zero or more cores allocated to the respective application process.

10. The method of claim 9, wherein one or more of the plurality of processor cores are dedicated cores allocated to the cloud platform;
optionally, wherein each of the plurality of processor cores that are not the one or more dedicated cores form a resource pool, wherein dynamically allocating zero or more processor cores of the plurality of processor cores to each of the plurality of application processes comprises dynamically allocating the zero or more processor cores from the resource pool to each of the plurality of application processes.

11. The method of claim 9 or claim 10, wherein the cloud platform comprises one or more servers, wherein the plurality of processor cores comprises a respective plurality of processor cores from each server.

12. The method of any preceding claim, wherein the cloud platform is a containerised cloud platform and wherein each of the application processes is hosted via a respective pod managed by the containerised cloud platform.

13. The method of claim 5 or claim 6, further comprising:
reducing processing requirements of the Open RAN application to reduce the hardware resource utilisation associated with the Open RAN application, based on the alarm;
optionally, wherein reducing processing requirements of the Open RAN application comprises reducing a frequency of a probe for collection of network performance metrics associated with the Open RAN application.

14. A cloud platform configured to perform the method of any of claims 1 to 12.

15. A computer program comprising instructions that, when executed on a processor of a cloud platform, cause the cloud platform to perform the method of any of claims 1 to 12.
